# EUROPÄISCHE PATENTANMELDUNG

(11) **EP 0 704 286 A1**
(43) Veröffentlichungstag der Anmeldung: **03.04.1996**
(21) Anmeldenummer: 94117876.6
(22) Anmeldetag: 11.11.1994
(51) Int. Cl.: B28C 5/42

(54) **Transportfahrzeug für Schüttgüter**

(30) Priorität: 30.09.1994 EP 94115490
(71) Anmelder: Gumbmann, Adam, D-91074 Herzogenaurach (DE)
(72) Erfinder: Gumbmann, Adam, D-91074 Herzogenaurach (DE)
(74) Vertreter: Flügel, Otto, Dipl.-Ing.

(57) **Zusammenfassung**

Die Erfindung betrifft ein Fahrzeug zum Transport von abbindenden bzw. aushärtenden, Wasser enthaltenden und während des Transports einer ständigen Bewegung auszusetzenden Schüttgütern, nämlich Mörtel, vorzugsweise in Form von Feinmörtel und/oder Grobmörtel, mit einem Fahrgestell (1), bestehend aus einem Rahmen (2) und zumindest eimer Achse (3), und mit einer auf dem Fahrgestell (1) montierten Transport- und Mischeinrichtung (8,9). Wobei die Transport- und Mischeinrichtung (8,9) in zumindest zwei Abteilungen zum Transport hinsichtlich Konsistenz, Verwendungszweck, Verwendungsort oder dergleichen unterschiedliche Güter unterteilt ist.

## Beschreibung

Die Erfindung betrifft ein Fahrzeug zum Transport von hydraulisch abbindenden bzw. aushärtenden, Wasser enthaltenden und während des Transports einer ständigen Bewegung auszusetzenden Schüttgütern, insbesondere Mörtel, Betone, Estriche oder dgl. Materialien vorzugsweise in Form von Leicht-, Normal- und/oder Schwermörtel, Mauer- und/oder Putzmörtel, verschiedene Estriche und/oder verschiedene Betone mit einem Fahrgestell, bestehend aus einem Rahmen und zumindest einer Achse, und mit einer auf dem Fahrgestell montierten Transport- und Mischeinrichtung.

Der Transport von abbindenden bzw. aushärtenden, Wasser enthaltenden und während des Transports einer ständigen Bewegung auszusetzenden Schüttgütern ist seitens der Transportfahrzeuge konstruktiv sehr aufwendig. Aus dem Stand der Technik sind Transportfahrzeuge bekannt, die ein Fahrgestell, vorzugsweise ein Lastkraftwagenfahrgestell mit einem Rahmen und einem Führerhaus aufweisen. Auf dem Rahmen des Fahrgestells ist bei derartigen Fahrzeugen eine drehend angetriebene Mischtrommel montiert. Diese Mischtrommel ist im Längsschnitt im wesentlichen elliptisch ausgebildet und weist an ihrem einen Stirnende eine Drehachse und an ihrem gegenüberliegenden Ende eine Befüll- und Entleerungsöffnung auf. Im Bereich der Befüll- und Entleerungsöffnung ist ein Trichter angeordnet, über den beispielsweise Fertigbeton, Mörtel oder andere abbindende bzw. aushärtende, Wasser enthaltende und während des Transports einer ständigen Bewegung auszusetzende Schüttgüter in die Mischtrommel eingegeben werden. Die Rotation der Mischtrommel hat somit insbesondere die Aufgabe, ein Entmischen des Schüttgutes in der Trommel zu verhindern.

Nachteil der voranstehend genannten Fahrzeuge ist, daß lediglich ein Schüttgut transportiert werden kann. Dies ist insbesondere beim Transport von Materialien verschiedener Güte und Eigenschaften nachteilig, da auf Baustellen mitunter verschiedene Mörtel, Betone und/oder Estriche in nur geringen Mengen benötigt wird. Demzufolge müssen zu diesen Baustellen zumindest zwei Fahrzeuge mit unterschiedlichen Materialien entsandt werden.

Ausgehend von dem voranstehend genannten Stand der Technik ist es Aufgabe der Erfindung, ein Fahrzeug der gattungsgemäßen Art zu schaffen, mit dem der gleichzeitige Transport unterschiedlicher Schüttgüter oder Materialien in kostengünstiger Weise möglich ist, wobei die Schüttgüter während des Transports kontinuierlich bewegt werden und an ihrer Verwendungsstelle getrennt voneinander aus dem Fahrzeug entladen werden können.

Die Lösung dieser Aufgabenstellung sieht bei einem gattungsgemäßen Fahrzeug zum Transport von abbindenden bzw. aushärtenden, Wasser enthaltenden und während des Transports einer ständigen Bewegung auszusetzenden Schüttgütern vor, daß die Transport- und Mischeinrichtung in zumindest zwei Abteilungen zum Transport hinsichtlich Konsistenz, Verwendungszweck, Verwendungsort oder dergleichen unterschiedlicher Güter unterteilt ist.

Demzufolge schlägt die Erfindung vor, auf einem Fahrgestell eines Fahrzeuges zwei Abteilungen für nach Konsistenz, Verwendungszweck, Verwendungsort oder dergleichen unterschiedliche Güter, wie Mörtel und dgl. anzuordnen, so daß diese Güter getrennt voneinander aus den Transportabteilungen entnommen werden können.

Bei einer ersten Ausführungsform der Erfindung ist vorgesehen, daß auf dem Fahrgestell zumindest zwei im Längsschnitt im wesentlichen elliptisch ausgebildete Transport- und Mischtrommeln angeordnet sind, die jeweils eine Befüll- und Entleerungsöffnung haben und über ihre Längsachse drehend antreibbar sind. Derartige Transport- und Mischtrommeln sind ansich bekannt und finden für den Transport von Fertigbeton, Mörtel oder dergleichen vielfältige Verwendung. Es handelt sich hierbei um solche Transport- und Mischtrommeln, die aus einzelnen Segmenten zusammengesetzt sind und in einem Rahmen auf einem Lastkraftwagenfahrgestell montiert sind, wobei die Transport- und Mischtrommel drehend antreibbar ist. Im Inneren der Transport- und Mischtrommel ist eine Misch- und Transportwendel angeordnet, die sowohl zum Mischen des eingefüllten Schüttgutes als auch zum Entleeren des Schüttgutes aus der Transport- und Mischtrommel heraus dient. Mit derartigen Transport- und Mischtrommeln wird Beton oder Mörtel oder ähnliche Materialien über größere Entfernungen von der Mischanlage zur Verarbeitungsstelle transportiert. Die Transport- und Mischtrommeln haben eine Größe bis zu 12 m³ und sind unter einer geneigten Drehachse auf serienmäßigen Lastkraftwagenfahrgestellen mit oder ohne Nachlaufachsen oder Sattelzügen montiert. Die Wendel bestehen aus verschleißfesten 6 bis 8 mm dicken Stahlblechen, wobei sich die Transport- und Mischtrommel beim Füllen und Entleeren in jeweils entgegengesetzter Richtung dreht. Angetrieben wird die Transport- und Mischtrommel hydraulisch durch einen Nebenabtrieb vom Fahrzeugmotor über ein Planetengetriebe, zum Teil mit vorgeschaltetem Winkelgetriebe am Trommelzapfen. Es sind aber auch derartige Fahrzeuge bekannt, bei denen die Transport- und Mischtrommel einen Separatmotor aufweist.

Durch die Anordnung von zumindest zwei derartig ausgebildeten Transport- und Mischtrommeln auf einem Lastkraftwagenfahrgestell wird die Möglichkeit geschaffen, zwei unterschiedliche Schüttgüter, beispielsweise Leichtmörtel und Schwermörtel mit einem einzigen Fahrzeug zu einer Einsatzstelle zu fahren, so daß an dieser Einsatzstelle sowohl Leichtmörtel als auch Schwermörtel gleichzeitig entladen werden können. Die Transport- und Mischtrommeln können größenmäßig aufeinander abgestimmt werden. Dabei können bekannte Lastkraftwagenfahrgestelle zur Montage der Transport- und Mischtrommeln, gegebenenfalls unter Verlängerung des Rahmens mit eventueller Nachlaufachse oder auch als Sattelaufleger, verwendet werden.

Eine alternative Ausgestaltung des erfindungsgemäßen Fahrzeuges sieht vor, daß auf dem Fahrgestell eine im Längsschnitt im wesentlichen elliptisch ausgebildete Transport und Mischtrommel angeordnet ist, in deren Innenraum eine zweite Mischtrommel mit im wesentlichen gleicher Außenkontur aber kleinerer Größe angeordnet ist, so daß zwischen der zweiten Mischtrommel und der ersten Mischtrommel ein Spaltraum besteht, der mit Mörtel oder dergleichen befüllbar ist. Bei dieser Ausgestaltung der Erfindung ist es vorteilhaft, daß ansich bekannte Transport- und Mischtrommelkonstruktionen verwendet und derart ergänzt werden können, daß in die Mischtrommel eine zweite, kleinere Mischtrommel eingesetzt wird, so daß beispielsweise in der zweiten, innen liegenden Mischtrommel Schwermörtel und in der ersten, durch den Spaltraum begrenzten Mischtrommel Leichtmörtel oder andere verschiedene Materialien transportiert werden kann.

Eine Weiterbildung dieser zweiten Ausführungsform der Erfindung sieht vor, daß beide Mischtrommeln eine gemeinsame Befüll- und Entleerungsöffnung haben. Darüberhinaus ist in vorteilhafter Ausgestaltung vorgesehen, daß beide Mischtrommeln drehfest miteinander verbunden und über einen gemeinsamen Antrieb drehrichtungsgleich angetrieben sind. Diese Ausgestaltung hat insbesondere den Vorteil, daß die bisher bekannte Konstruktion eines sogenannten Transportbetonmischers beibehalten werden kann, wobei über den Fahrzeugantrieb die beiden ineinander angeordneten Transport- und Mischtrommeln in der Weise angetrieben werden, wie es voranstehend bezüglich der allgemeinen Ausführungen zu Transport- und Mischtrommeln beschrieben ist.

Die Verbindung der beiden ineinanderliegenden Transport- und Mischtrommeln erfolgt vorzugsweise an ihrem der Befüll- und Entleerungsöffnung gegenüberliegenden Ende, an welchem die beiden Mischtrommeln miteinander verbolzt oder verschweißt sind, wobei die Verbindungsstelle vorzugsweise eine die Entleerung des Spaltraumes fördernde eckfreie gewölbte Kontur hat, so daß sich Materialien nicht festsetzen können. Eine derartige Ausbildung ist beispielsweise dadurch gegeben, daß der Übergang zwischen dem Ende der innenliegenden, zweiten Mischtrommel zu der außenliegenden, ersten Mischtrommel, d.h. zwischen dem Außenbereich der zweiten Mischtrommel und der Innenfläche der ersten Mischtrommel, kreisbogenabschnittförmig ausgebildet ist, so daß in diesem Bereich angeordnetes Schüttgut durch die Entleerungseinrichtung, nämlich die Misch- und Förderwendel, ausgetragen werden kann.

Nach einem weiteren Merkmal der Erfindung, nämlich der zweiten Ausführungsform ist vorgesehen, daß beide Mischtrommeln über einen Trichter befüllbar sind, der oberhalb der Befüll- und Entleerungsöffnung angeordnet ist und eine zwischen Spaltraum und Innenraum der zweiten Mischtrommel stellbare Leiteinrichtung hat. Demzufolge ist der Trichter derart ausgebildet, daß sein in die beiden Mischtrommeln einragendes Ende als verschwenkbare Verteilschurre ausgebildet ist, die zwischen einer Stellung in der sie die innenliegende Trommel befüllt und einer Stellung in der sie den Spaltraum befüllt verschwenkbar ist.

Eine Weiterbildung der zweiten Ausführungsform sieht vor, daß im Bereich der Befüll- und Entleerungsöffnung eine vorzugsweise deckelförmig ausgebildete Verschlußeinrichtung angeordnet ist, die zweiteilig derart ausgebildet ist, daß der Spaltraum und/oder der Innenraum der zweiten Trommel geöffnet ist.

Bei dieser Ausgestaltung hat es sich als vorteilhaft erwiesen, daß durch die Verschlußeinrichtung ein getrenntes Entleeren des Spaltraumes bzw. der innenliegenden Mischtrommel in konstruktiv einfacher Weise ausgeführt werden kann. Soll beispielsweise der Spaltraum entleert werden, wird die Befüll- und Entleerungsöffnung der innenliegenden Mischtrommel verschlossen und der Ringraum der gemeinsamen Befüll- und Entleerungsöffnung für den Spaltraum der Mischtrommel geöffnet. Bei der Entleerung der innenliegenden Mischtrommel wird dementsprechend die entgegengesetzte Stellung der Verschlußeinrichtung gewählt, so daß der Spaltraum verschlossen und die Befüll- und Entleerungsöffnung der innenliegenden Mischtrommel geöffnet ist.

Die voranstehend genannte erste Ausführungsform des erfindungsgemäßen Fahrzeuges wird in vorteilhafter Weise dadurch weitergebildet, daß beide Transport- und Mischtrommeln gleich ausgerichtet sind, so daß die beiden Befüll- und Entleerungsöffnungen vorzugsweise zum Heck des Fahrgestells ausgerichtet sind. Durch diese Ausgestaltung wird insbesondere der Vorteil erzielt, daß im Bereich eines auf den Fahrgestell angeordneten Fahrerhauses kein Einfülltrichter angeordnet ist, wodurch bei fehlerhafter Beladung Schüttgut auf das Fahrerhaus bzw. auf die zwischen Fahrerhaus und Mischtrommeln angeordneten Antriebselemente fallen kann. Ein notwendiger Wassertank würde sich dabei vorzugsweise über dem angetriebenen Ende der Mischtrommel anordnen lassen.

Eine alternative Ausgestaltung der ersten Ausführungsform der Erfindung sieht vor, daß die Befüll- und Entleerungsöffnungen der beiden Transport- und Mischtrommeln in entgegengesetzten Richtungen ausgerichtet sind. Bei dieser Ausgestaltung sind die beiden Transport- und Mischtrommeln derart angeordnet, daß sich die jeweiligen Enden mit den Antriebsorganen für die Drehbewegung der Mischtrommeln benachbart gegenüberliegen, so daß der Antrieb beider Transport- und Mischtrommeln mittels einer Antriebseinrichtung erfolgen kann. Demzufolge sieht eine weitere Ausgestaltung der ersten Ausführungsform der Erfindung vor, daß beide Transport- und Mischtrommeln von einem gemeinsamen Antriebsmotor angetrieben sind, dessen Drehmoment über ein Verteilergetriebe auf die Drehachsen der Transport- und Mischtrommeln übertragbar ist. Ein gemeinsamer notwendiger Wassertank würde sich daher vorzugsweise über dem gemeinsamen Antrieb anordnen lassen.

In vorteilhafter Weise hat jede Transport- und Mischtrommel einen oberhalb der Befüll- und Entleerungsöffnungen angeordneten Trichter, so daß die Befüllung der Transport- und Mischtrommeln gleichzeitig mit unterschiedlichen Schüttgütern, beispielsweise mit Leichtmörtel und Schwermörtel erfolgen kann.

Schließlich hat es sich als vorteilhaft erwiesen, die Längsachsen der Transport- und Mischtrommeln parallel zur Längsachse des Fahrgestells anzuordnen, da diese Anordnung eine konstruktiv einfache Ausgestaltung ist und in Abhängigkeit des Fahrgestells die Verwendung von Transport- und Mischtrommeln erlaubt, die gemeinsam vorzugsweise etwa bis zu 12 m³ fassen können.

Selbstverständlich wäre jedoch auch eine etwa senkrecht zur Längsachse des Fahrzeugs ausgerichtete Anordnung der einzelnen Trommelachsen möglich.

Ein erfindungsgemäßes Fahrzeug zum Transport von hydraulisch abbindenden bzw. aushärtenden Wasser enthaltenden und während des Transports einer ständigen Bewegung auszusetzenden Schüttgütern kann darüber hinaus derart ausgebildet sein, daß zumindest eine Transport- und Mischtrommel derart auf dem Fahrgestell angeordnet ist, daß die Befüll- und Entleerungsöffnung im Bereich neben dem Fahrerhaus angeordnet ist. Derartige Fahrzeuge haben in der Regel ein Fahrerhaus, das lediglich für den Fahrer ausgelegt und seitlich versetzt zur Mittellängsachse des Fahrzeuges angeordnet ist. Neben dem Fahrerhaus befindet sich dann zumindest ein Teilbereich der Transport- und Mischtrommel, so daß die Transport- und Mischtrommel derart angeordnet ist, daß die Befüllung dieser Transport- und Mischtrommel über einen neben dem Fahrerhaus angeordneten Trichter erfolgt. Demzufolge kann von dem Fahrerhaus aus der Befüllvorgang beobachtet werden. Ein weiterer Vorteil dieser Ausgestaltung ist, daß zumindest die eine Transport- und Mischtrommel in Vorwärtsfahrtrichtung des Fahrzeuges entleerbar ist, so daß der Fahrer bei der Entleerung das Fahrzeug ohne Rückwärtsgang an die Entladestelle heranfahren kann. Gleiches gilt selbstverständlich für das Beladen der Transport- und Mischtrommel. Hieraus ergibt sich der Vorteil, daß insbesondere auf Baustellen bestehende Notwendigkeit das Fahrzeug rückwärts an die Entladestelle heranzufahren bei der Entladung einer Transport- und Mischtrommel entfällt. Die voranstehend geschilderte Ausführungsform eines erfindungsgemäßen Fahrzeuges kann sowohl die Anordnung von zwei getrennten Transport- und Mischtrommeln als auch die Anordnung einer Transport- und Mischtrommel mit innenliegender zweiter Transport- und Mischtrommel vorsehen.

Weitere Vorteile und Merkmale der Erfindung ergeben sich aus der nachfolgenden Figurenbeschreibung, in der bevorzugte Ausführungsformen des erfindungsgemäßen Fahrzeuges dargestellt sind. In der Zeichnung zeigt:
- Figur 1: eine Seitenansicht eines Fahrzeuges in einer ersten Ausführungsform;
- Figur 2: eine Seitenansicht eines Abschnittes eines Fahrzeuges in einer zweiten Ausführungsform;
- Figur 3: einen Trichter für ein Fahrzeug gemäß Figur 2 in einer ersten Stellung;
- Figur 4: eine Seitenansicht des Trichters gemäß Figur 3 in einer zweiten Stellung;
- Figur 5: eine Ansicht einer Verschlußeinrichtung für das Fahrzeug gemäß Figur 2
- Figur 6: eine geschnittene Seitenansicht der Verschlußeinrichtung gemäß Figur 5 entlang der Schnittlinie VI-VI in Figur 5 und
- Figur 7:: eine Ansicht einer weiteren Ausführungsform eines Fahrzeuges.

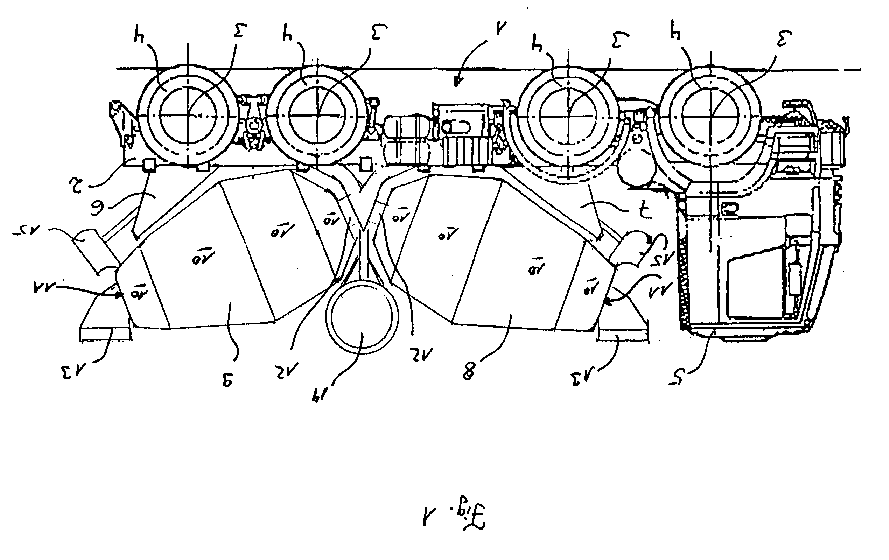

Ein in der Figur 1 dargestelltes Fahrzeug zum Transport von abbindenden bzw. aushärtenden, Wasser enthaltenden und während des Transportes einer ständigen Bewegung auszusetzenden Schüttgütern besteht aus einem Fahrgestell 1, welches durch einen Rahmen 2 mit daran angeordneten Achsen 3 gebildet ist, wobei jede Achse 3 endseitig zumindest jeweils ein Rad 4 hat. An einem Ende des Fahrgestells 1 ist ein Führerhaus 5 angeordnet, wobei zwischen dem Führerhaus 5 und dem Rahmen 2 der auf zumindest einer Achse 3 wirkende Antrieb in Form eines Verbrennungsmotors angeordnet ist.

In der Figur 1 nicht dargestellt ist ein Hilfsrahmen, der zwischen zwei Längsträgern des Rahmens 2 angeordnet ist und auf dem zwei Böcke 6 und 7 gelagert sind, so daß Spannungen aus Verwindungen des Rahmens 2 bei Geländefahrten nicht auf den Hilfsrahmen und die Böcke 6 und 7 übertragen werden.

In jedem Bock 6, 7 ist eine Transport- und Mischtrommel 8 bzw. 9 drehbar gelagert, welche im Längsschnitt im wesentlichen elliptisch ausgebildet ist. Die Transport- und Mischtrommeln 8, 9 bestehen aus einzelnen miteinander verschweißten Segmenten 10, die im Querschnitt ringförmig ausgebildet sind. Jede Transport- und Mischtrommel 8, 9 weist an einer Stirnfläche eine Befüll- und Entleerungsöffnung 11 auf, über welche Schüttgut in die Transport- und Mischtrommel 8, 9 eingegeben oder aus dieser entnommen werden kann. Nicht dargestellt ist in der Figur 1 eine in jeder Transport- und Mischtrommel 8, 9 angeordnete Mischwendel, die entlang der Innenfläche der Transport- und Mischtrommel 8, 9 verläuft.

Die Transport- und Mischtrommel 8, 9 liegt unter einem Winkel zur Längsachse des Fahrgestells 1 in dem Bock 6, 7, wobei die Transport- und Mischtrommel 8, 9 beispielsweise mit einem gewalzten Laufring auf zwei geschmiedeten Laufrollen mit einstellbaren Kegelrollenlagern aufliegt und mit einem Zapfen 12 am Trommelboden in dem Bock 6, 7 gelagert ist. Der Trommelboden befindet sich hierbei an der der Befüll- und Entleerungsöffnung 11 gegenüberliegenden Stirnseite der Transport- und Mischtrommel 8, 9.

Der Antrieb der Transport- und Mischtrommeln 8, 9 erfolgt über einen Nebenabtrieb vom Fahrzeugmotor hydraulisch über ein Planetengetriebe mit vorgeschaltetem Winkelgetriebe und Verteilergetriebe zum Zapfen 12 der Transport- und Mischtrommel 8, 9. Es ist aber auch denkbar, daß zum Antrieb der Transport- und Mischtrommeln 8, 9 ein separater Antriebsmotor vorgesehen ist.

Jeder Transport- und Mischtrommel 8 und 9 ist ein Trichter 13 zugeordnet, der oberhalb der Befüll- und Entleerungsöffnung 11 angeordnet ist. Wie aus der Figur 1 zu erkennen ist, verläuft die Längsachse der Transport-und Mischtrommeln 8 und 9 parallel zur Längsachse des Fahrgestells 1. Schließlich ist der Figur 1 ein Wasserbehälter 14 zu entnehmen, der im Bereich oberhalb der beiden die Zapfen 12 aufweisenden Stirnseiten der Transport- und Mischtrommeln 8 und 9 angeordnet ist. Aus diesem Wasserbehälter 14 wird den Transport- und Mischtrommeln gegebenenfalls Wasser zugeleitet.

Schließlich sind in der Figur 1 noch schwenkbare Verteilschurren 15 zu erkennen, die unterhalb der Befüll- und Entleerungsöffnungen 11 angeordnet sind und der Abgabe des Schüttgutes in Krankübel, in den Trichter einer Betonpumpe oder direkt in die Schalung dienen.

Die Transport- und Mischtrommeln werden bei den dargestellten Fahrzeug von einem gemeinsamen Antriebsmotor angetrieben, dessen Drehmoment über ein Verteilergetriebe auf die durch die Zapfen gebildeten Drehachsen der Transport- und Mischtrommeln 8 und 9 übertragen.

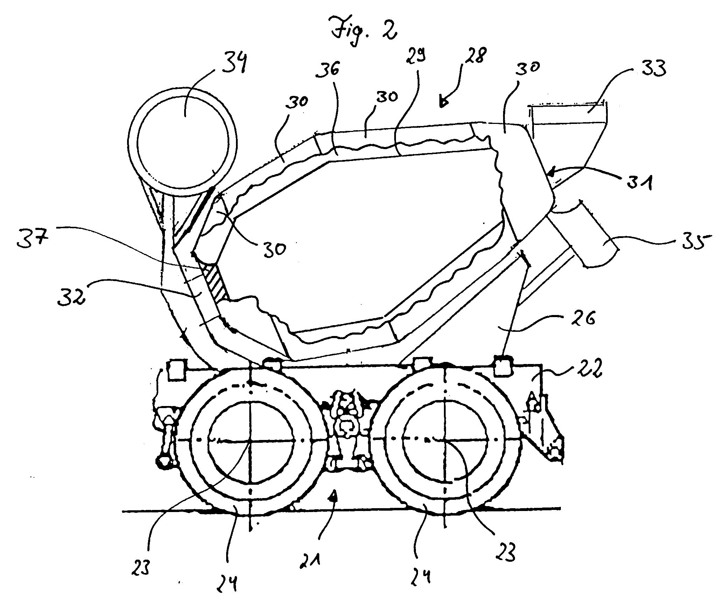

In den Figuren 2 bis 6 ist eine zweite Ausführungsform eines Fahrzeuges zum Transport von abbindenden bzw. aushärtenden, Wasser enthaltenden und während des Transports einer ständigen Bewegung auszusetzenden Schüttgütern, nämlich Mörtel, vorzugsweise in Form von Leichtmörtel und/oder Schwermörtel dargestellt, wobei Figur 2 lediglich einen Ausschnitt eines Fahrgestells 21 mit einem Rahmen 22 zeigt. Der Rahmen 22 ist entsprechend dem Rahmen 2 gemäß Figur 1 ausgebildet so daß er Rahmen 22 ebenfalls Achsen 23 mit an deren Endseiten angeordneten Rädern 24 hat. Darüberhinaus ist auf dem Rahmen 22 unter Zwischenlage eines nicht dargestellten Hilfsrahmens ein Bock 26 montiert, in dem eine drehend angetriebene Transport- und Mischtrommel 28 analog zu dem Ausführungsbeispiel gemäß Figur 1 gelagert ist.

Die Transport- und Mischtrommel 28 ist im Längsschnitt im wesentlichen elliptisch ausgebildet und besteht aus mehreren miteinander verbundenen, vorzugsweise verschweißten Segmenten 30. Im Innenraum der Transport- und Mischtrommel 28 ist eine zweite Mischtrommel 29 angeordnet, die ebenfalls aus Segmenten besteht und im wesentlichen eine zu der Transport- und Mischtrommel 28 gleiche Außenkontur aber kleinere Größe aufweist, so daß zwischen der Mischtrommel 29 und der Transport- und Mischtrommel 28 ein Spaltraum 36 besteht, der mit Mörtel oder dergleichen befüllbar ist.

Beide Transport- und Mischtrommeln 28 und 29 haben eine gemeinsame Befüll- und Entleerungsöffnung 31, die sich an einer Stirnseite der Transport- und Mischtrommel 28 befindet. An der der Befüll- und Entleerungsöffnung 31 gegenüberliegenden Stirnseite ist die Transport- und Mischtrommel 28 über einen Zapfen 32 im Bock 26 gelagert. Über diesen Zapfen 32 erfolgt auch der Antrieb der Transport- und Mischtrommeln 28 und 29, der in der Figur 2 nicht dargestellt ist, analog zum Ausführungsbeispiel gemäß Figur 1 ebenfalls über einen Nebenabtrieb oder einen separaten Antriebsmotor mit nachgeschaltetem Getriebe.

Die innenliegende Transport- und Mischtrommel 29 ist im Bereich der den Zapfen 32 aufweisenden Stirnseite mit der äußeren Transport- und Mischtrommel 28 drehfest verbunden, so daß beide Transport- und Mischtrommeln 28 und 29 über einen gemeinsamen Antrieb drehrichtungsgleich angetrieben sind. Die Verbindung zwischen den beiden Transport- und Mischtrommeln 28, 29 erfolgt vorzugsweise durch ein Verbindungselement 37, das an der Außenseite der Stirnfläche der innenliegenden Transport- und Mischtrommel 29 und an der Innenseite der Stirnfläche der außenliegenden Transport- und Mischtrommel 28 verschweißt oder alternativ verbolzt ist. Das die Verbindungsstelle bildende Verbindungselement 37 ist im Querschnitt im wesentlichen trapezförmig ausgebildet, wobei die beiden Schmalseiten des Verbindungselementes 37, d.h. die beiden nicht mit den Transport- und Mischtrommeln 28 und 29 verbundenen Seitenflächen des Verbindungselementes 37 kreisbogenabschnittförmig ausgebildet sind, so daß diese Ausgestaltung eine die Entleerung des Spaltraumes 36 fördernde Außenkontur des Verbindungselementes 37 darstellt.

In der Figur 2 nicht dargestellt sind zwei Misch- und Förderwendeln, die im Inneren der beiden Transport- und Mischtrommeln 28 und 29 angeordnet sind und sowohl für eine innige Durchmischung des zu transportierenden Schüttgutes als auch für die Entleerung der Transport- und Mischtrommeln 28 und 29 vorgesehen sind. Die unterschiedlichen Funktionen der nicht dargestellten Misch- und Förderwendeln werden, wie auch beim Ausführungsbeispiel gemäß Figur 1 durch unterschiedliche Drehrichtungen der Transport- und Mischtrommeln 28 und 29 bereitgestellt.

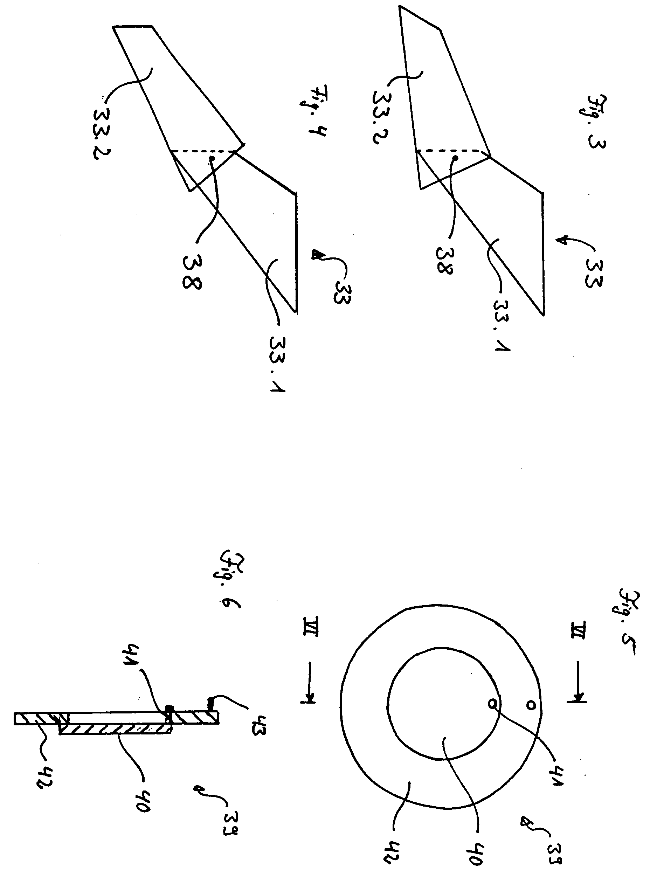

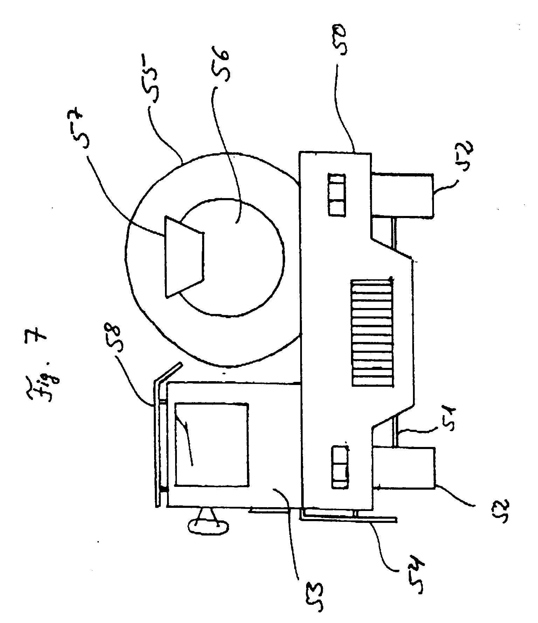

Oberhalb der Befüll- und Entleerungsöffnung 31 ist ein Trichter 33 angeordnet, der detailliert in den Figuren 3 und 4 dargestellt ist. Der Trichter 33 ist zweiteilig ausgebildet und hat einen oberen feststehenden Teil 33.1 und einen unteren, um eine Achse 38 verschwenkbaren Teil 33.2. Dieser Trichter 33 erlaubt eine getrennte Beschickung der innenliegenden Transport- und Mischtrommel 29 und des Spaltraumes 36. In der Figur 3 ist die Stellung des Trichters 33 bei der Beschickung des Innenraumes der Transport- und Mischtrommel 29 und in der Figur 4 ist die Stellung des Trichters 33 bei der Beschickung des Spaltraumes 36 zwischen der Transport- und Mischtrommel 28 und der Transport- und Mischtrommel 29 dargestellt.

Die Figuren 5 und 6 zeigen eine Verschlußeinrichtung 39, die auf die Befüll- und Entleerungsöffnung 31 aufgesetzt wird, um ein getrenntes Entleeren der Transport- und Mischtrommel 28 und 29 zu ermöglichen. Die Verschlußeinrichtung 39 besteht aus einem Deckel 40, der um eine Drehachse 41 verdrehbar an einer Ringscheibe 42 befestigt ist. Die Ringscheibe 42 hat eine Öffnung, die mit der Befüll- und Entleerungsöffnung der innenliegenden Transport- und Mischtrommel 29 sowie mit dem Deckel 40 übereinstimmt. Die Ringfläche der Ringscheibe 42 ist entsprechend dem Ringraum zwischen der Transport- und Mischtrommel 28 und der Transport- und Mischtrommel 29 im Bereich der Befüll- und Entleerungsöffnung 31 ausgebildet, so daß der Spaltraum 36 im Bereich der Befüll- und Entleerungsöffnung 31 durch die Ringscheibe 42 abdeckbar ist. Die Befestigung der Ringscheibe 42 an der Transport- und Mischtrommel 28 erfolgt über einen Bolzen 43, um welchen die Ringscheibe 42 zusammen mit dem Deckel 40 verschwenkbar ist. Darüberhinaus sind sowohl im Bereich des Deckels 40 als auch im Bereich der Ringscheibe 42 nicht dargestellte Arretierungsvorrichtungen vorgesehen, die eine stabile Befestigung der Verschlußeinrichtung 39 an der Transport-und Mischtrommel 28 ermöglichen.

Schließlich ist aus der Figur 2 zu erkennen, daß unterhalb der Befüll- und Entleerungsöffnung 31 eine Verteilschurre 35 und daß oberhalb der Transport- und Mischtrommel 28 im Bereich der den Zapfen 32 aufweisenden Stirnseite ein Wasserbehälter 34 angeordnet sind.

Die voranstehend beschriebene Erfindung ist nicht auf die dargestellten Ausführungsformen beschränkt. Vielmehr sind Abwandlungen und Veränderungen möglich, ohne den Schutzbereich der Erfindung zu verlassen. Beispielsweise können auch mehr als zwei Transport- und Mischtrommeln auf einem Fahrgestell angeordnet sein. Darüberhinaus ist es möglich, daß das Fahrzeug als Anhänger ausgebildet ist. Schließlich ist es auch denkbar, daß die Transport- und Mischtrommeln mit ihren Längsachsen antiparallel zur Längsachse des Fahrgestells, beispielsweise unter einem Winkel von 90° zur Längsachse des Fahrgestells angeordnet sind.

In der Figur 7 ist ein weiteres Ausführungsbeispiel eines erfindungsgemäßen Fahrzeuges dargestellt. Das Fahrzeug weist ein Fahrgestell 50 mit zumindest zwei Achsen auf, von denen in Figur 7 lediglich die Achse 51 dargestellt ist, an deren beiden Enden jeweils ein Rad 52 angeordnet ist. Auf dem Fahrgestell 50 ist ein Führerhaus 53 angeordnet, welches seitlich versetzt zur Längsmittelachse des Fahrgestells 50 mit dem Fahrgestell 50 verbunden ist und über eine Aufstiegshilfe 54 erreichbar ist.

Ferner ist auf dem Fahrgestell 50 eine Transport- und Mischtrommel 55 angeordnet, die entsprechend den voranstehenden Ausführungen gemäß der Transport- und Mischtrommel nach Figur 2 ausgebildet und in entsprechender Weise durch den nicht dargestellten Fahrzeugmotor antreibbar ist. Es ist aber auch denkbar, daß auf dem Fahrgestell 50 zwei Transport- und Mischtrommeln 55 in der Art angeordnet sind, wie es in Figur 1 dargestellt ist.

Die Transport- und Mischtrommel weist eine Befüll- und Entleeröffnung 56 auf, die zur Fahrzeugfront ausgerichtet ist.

Es ist aus der Figur 7 zu erkennen, daß die Transport- und Mischtrommel 55 mit zumindest einem Teilbereich seitlich neben dem Führerhaus 53 angeordnet ist, wobei die Transport- und Mischtrommel einen Befülltrichter 57 hat, der neben dem Führerhaus 53 angeordnet ist und über den die Transport- und Mischtrommel befüllbar ist.

Zum Schutz des Führerhauses beim Befüllen der Transport- und Mischtrommel 55 über den Befülltrichter 57 ist oberhalb des Führerhauses 53 eine in Teilbereichen abgewinkelte Schutzvorrichtung 58 in Form einer Prallplatte angeordnet.

Bei der voranstehend beschriebenen Ausführungsform des erfindungsgemäßen Fahrzeuges ist es vorteilhaft, daß das Fahrzeug in Vorwärtsfahrtrichtung sowohl an eine Befülleinrichtung als auch an die Entladestelle herangefahren werden kann, so daß Rangierarbeiten an der Belade- bzw. der Entladestelle, bei denen das Fahrzeug rückwärts gefahren werden muß, vermieden werden können. Die Ausgestaltung der Transport- und Mischtrommel 55 entspricht hierbei den alternativen Ausgestaltungen gemäß den Figuren 1 und 2.

## Patentansprüche

1. Fahrzeug zum Transport von hydraulisch abbindenden bzw. aushärtenden, Wasser enthaltenden und während des Transports einer ständigen Bewegung auszusetzenden Schüttgütern, insbesondere Mörtel, Betone, Estriche oder dgl. Materialien, vorzugsweise in Form von Leichtmörtel und/oder Schwermörtel, Mauer- und/oder Putzmörtel, verschiedene Erstriche und/oder Betone mit einem Fahrgestell, bestehend aus einem Rahmen und zumindest einer Achse, und mit einer auf dem Fahrgestell montierten Transport- und Mischeinrichtung,
**dadurch gekennzeichnet**,
daß die Transport- und Mischeinrichtung (8, 9; 28, 29; 55) in zumindest zwei Abteilungen zum Transport hinsichtlich Konsistenz, Verwendungszweck, Verwendungsort oder dergleichen unterschiedlicher Güter unterteilt ist.

2. Fahrzeug nach Anspruch 1,
**dadurch gekennzeichnet**,
daß auf dem Fahrgestell (1) zumindest zwei im Längsschnitt im wesentlichen elliptisch ausgebildete Transport- und Mischtrommeln (8, 9; 55) angeordnet sind, die jeweils eine Befüll- und Entleerungsöffnung (11; 56) haben und über ihre Längsachsen drehend antreibbar sind.

3. Fahrzeug nach Anspruch 1,
**dadurch gekennzeichnet**,
daß auf dem Fahrgestell (21; 50) eine im Querschnitt im wesentlichen elliptisch ausgebildete Transport- und Mischtrommel (28; 55) angeordnet ist, in deren Innenraum eine zweite Mischtrommel (29) mit im wesentlichen gleicher Außenkontur aber Kleinerer Größe angeordnet ist, so daß zwischen der zweiten Mischtrommel (29) und der ersten Mischtrommel (28; 55) ein Spaltraum (36) besteht, der mit Mörtel oder dergleichen befüllbar ist.

4. Fahrzeug nach Anspruch 3,
**dadurch gekennzeichnet**,
daß beide Mischtrommeln (28, 29; 55) eine gemeinsame Befüll- und Entleerungsöffnung (31) haben.

5. Fahrzeug nach Anspruch 3,
**dadurch gekennzeichnet**,
daß beide Mischtrommeln (28, 29; 55) drehfest miteinander verbunden und über einen gemeinsamen Antrieb drehrichtungsgleich angetrieben sind.

6. Fahrzeug nach Anspruch 5,
**dadurch gekennzeichnet**,
daß beide Mischtrommeln (28, 29; 55) an ihrem der Befüll- und Entleerungsöffnung (31) gegenüberliegenden Ende miteinander verbolzt oder verschweißt sind, wobei die Verbindungsstelle (37) vorzugsweise eine die Entleerung des Spaltraumes (36) fördernde Außenkontur hat.

7. Fahrzeug nach Anspruch 3,
**dadurch gekennzeichnet**,
daß beide Mischtrommeln (28, 29; 55) über einen Trichter (33; 57) befüllbar sind, der oberhalb der Befüll- und Entleerungsöffnung (31; 56) angeordnet ist und eine zwischen Spaltraum (36) und Innenraum der zweiten Mischtrommel (29) stellbare Leiteinrichtung hat.

8. Fahrzeug nach Anspruch 4,
**dadurch gekennzeichnet**,
daß im Bereich der Befüll- und Entleerungsöffnung (31; 56) eine vorzugsweise deckelförmig ausgebildete Verschlußeinrichtung (39) angeordnet ist, die zweiteilig derart ausgebildet ist, daß der Spaltraum (36) und/oder der Innenraum der zweiten Mischtrommel (29) geöffnet ist.

9. Fahrzeug nach Anspruch 2,
**dadurch gekennzeichnet**,
daß beide Transport- und Mischtrommeln (8, 9; 55) gleich ausgerichtet sind, so daß die beiden Befüll- und Entleerungsöffnungen (11; 56) vorzugsweise zum Heck des Fahrgestells (1) ausgerichtet sind.

10. Fahrzeug nach Anspruch 2,
**dadurch gekennzeichnet**,
daß die Befüll- und Entleerungsöffnungen (11; 56) der beiden Transport- und Mischtrommeln (8, 9; 55) in entgegengesetzte Richtungen ausgerichtet sind.

11. Fahrzeug nach Anspruch 10,
**dadurch gekennzeichnet**,
daß beide Transport- und Mischtrommel (8, 9; 55) von einem gemeinsamen Antriebsmotor angetrieben sind, dessen Drehmoment über ein Verteilergetriebe auf die Drehachsen der Transport- und Mischtrommeln (8, 9; 55) übertragbar ist.

12. Fahrzeug nach Anspruch 2,
**dadurch gekennzeichnet**,
daß jede Transport- und Mischtrommel (8, 9; 55) einen oberhalb der Befüll- und Entleerungsöffnungen (11; 56) angeordneten Trichter (13; 57) hat.

13. Fahrzeug nach Anspruch 1, 2 oder 3,
**dadurch gekennzeichnet**,
daß die Transport- und Mischtrommel (8, 9; 28, 29; 55) auf einem Fahrgestell (1; 21; 50) eines angetriebenen Lastkraftwagens, Sattelaufleger oder dgl. angeordnet sind.

14. Fahrzeug nach Anspruch 2 oder 3,
**dadurch gekennzeichnet**,
daß die Längsachsen der Transport- und Mischtrommeln (8, 9; 28, 29; 55) parallel zur Längsachse des Fahrgestells (1, 21; 50) verlaufen.

15. Fahrzeug nach Anspruch 13,
**dadurch gekennzeichnet**,
daß der Sattelaufleger eine der aufzunehmende Last entsprechende Anzahl von Achsen, vorzugsweise zwei oder drei Achsen aufweist.

16. Fahrzeug nach Anspruch 1, 2 oder 3,
**dadurch gekennzeichnet**,
daß zumindest eine Transport- und Mischtrommel (8, 9; 28, 29; 55) derart auf dem Fahrgestell (1, 21; 50) angeordnet ist, daß die Befüll- und Entleerungsöffnung (11; 56) im Bereich neben dem Fahrerhaus (5, 53) angeordnet ist.
